# EUROPÄISCHE PATENTSCHRIFT

(11) **EP 1 525 572 B1**
(45) Veröffentlichungstag und Bekanntmachung des Hinweises auf die Patenterteilung: **31.05.2006**
(21) Anmeldenummer: 03766282.2
(22) Anmeldetag: 24.07.2003
(51) Int. Cl.: G09F 3/10

(54) **GEGEN KLEBSTOFF-AUSBLUTEN GESICHERTE ETIKETTEN**
LABELS PROTECTED AGAINST ADHESIVE BLEEDING
ETIQUETTES PROTEGEES CONTRE LA MIGRATION D'ADHESIF

(30) Priorität: 01.08.2002 DE 10235218
(43) Veröffentlichungstag der Anmeldung: 27.04.2005
(73) Patentinhaber: Schreiner Group GmbH & Co. KG, 85764 Oberschleissheim (DE)
(72) Erfinder: GRÖTZNER, Roland, 85716 Unterschleissheim (DE); SCHREINER, Helmut, 80995 München (DE)
(74) Vertreter: Kehl, Günther
(86) Internationale Anmeldenummer: PCT/EP2003/008133
(87) Internationale Veröffentlichungsnummer: WO 2004/013831

(56) Entgegenhaltungen:
- EP-A- 0 951 004
- EP-A- 1 116 745
- EP-A- 1 215 644

## Beschreibung

Die vorliegende Erfindung betrifft gegen Ausbluten von Haftklebstoff gesicherte Etiketten sowie deren Herstellung, insbesondere hierzu verwendete Etikettenrohlinge aufweisend einen Oberfofienabschnitt, einen mit dem Oberfolienabschnitt verbundenen Unterfolienabschnitt und eine Haftklebstoffschicht, welche an der vom Oberfolienabschnitt abgewandten Seite des Unterfolienabschnitts angebracht ist.

Aus dem Dokument EP-A2-0951004 ist an selbstfelebandes Folienetikett bekannt, welches sich in inblichen Waschvorrichtung ablösen lässt. Einen entsprechenden grundsätzlichen Aufbau aufweisende Etiketten sind vielfach bekannt. Allerdings besteht bei diesen, wie auch bei vielen anders aufgebauten Etiketten das Problem, daß der Haftklebstoff häufig zum Ausbluten neigt. Darunter versteht man das Austreten von Klebstoff aus der Haftklebstoffschicht über die Etikettenkontur hinaus. Ausbluten kann beispielsweise während der Weiterverarbeitung, auf dem Transport zum Kunden oder aber bei der Lagerung auftreten. Der austretende Haftklebstoff führt zum Verkleben gerollter Etikettenbahnen und kann sich auch anderweitig negativ auswirken, beispielsweise bei der Nachbeschriftung oder anderen Weiterverarbeitungsschritten. So können mit ausgetretenem Klebstoff verunreinigte Drucksysteme rasch unbrauchbar werden.

Ausbluten tritt insbesondere dann auf, wenn Klebsoffe mit hoher Fließfähigkeit (wie etwa bestimmte Sonderklebstoffe) verwendet werden und/oder hohe Klebstoff-Auftraggewichte vorliegen. Um sichere Haftung auf Unterlagen mit schwierigen Oberflächenverhältnissen zu gewährleisten, läßt sich jedoch oft der Einsatz entsprechend fließfähiger Klebstoffe mit entsprechend hohen Auftragsgewichten nicht vermeiden.

Angesichts der dargelegten Problematik ist es Aufgabe der vorliegenden Erfindung, gegen Ausbluten von Haftklebstoff gesicherte Etiketten sowie ein Verfahren zu deren Herstellung zu schaffen. Der technische Aufwand soll dabei überschaubar bleiben, um keine unnötigen zusätzlichen Kosten zu verursachen.

Nach einem Aspekt der vorliegenden Erfindung wird diese Aufgabe durch Schaffung von Etikettenrohlingen gelöst, welche jeweils einen Oberfolienabschnitt, einen mit dem Oberfolienabschnitt verbundenen Unterfolienabschnitt und eine Haftklebstoffschicht, welche an der vom Oberfolienabschnitt abgewandten Seite des Unterfolienabschnitts angebracht ist, aufweisen, wobei der Unterfolienabschnitt aus einer Schrumpffolie besteht. Deren Flächenausdehnung ist durch Temperaturerhöhung in einen gegenüber Raumtemperatur angehobenen Temperaturbereich reduzierbar. Folien mit entsprechenden Materialeigenschaften sind vielfach bekannt. Vorzugsweise kommen Polypropylen- oder Polyethylenfolien zum Einsatz, jedoch sind auch Polyesterschrumpffolien oder andere geeignete Materialien verwendbar. Der Oberfolienabschnitt, welcher vorzugsweise thermostabilisiert ist, d.h. etwa aus thermostabilisiertem Polyester oder anderem temperaturstabilen Material besteht, erfährt dagegen keine merkliche Reduzierung seiner Flächenausdehnung. Darunter ist zu verstehen, daß eine eventuelle Schrumpfung des Oberfolienabschnitts wesentlich kleiner, höchstens jedoch halb so groß wie die Schrumpfung des Unterfolienabschnitts ist.

Gemäß einer besonders bevorzugten Ausführungsform ist die Verbindung zwischen Oberfolienabschnitt und Unterfolienabschnitt so ausgeführt, daß sie bei Reduzierung der Flächenausdehnung des Unterfolienabschnitts in dem angehobenen Temperaturbereich nur Schubspannungen übertragen kann, welche nicht ausreichen, den Oberfolienabschnitt aufzuwölben. Mit anderen Worten können die einander zugewandten Oberflächen von Ober- und Unterfolienabschnitt aufeinander abgleiten, wenn der Unterfolienabschnitt zum Schrumpfen gebracht wird. Gleichzeitig überträgt die Verbindung in ausreichendem Maße Normalspannungen, um ungewolltes Abheben des Oberfolienabschnitts vom Unterfolienabschnitt zu verhindern.

Neben anderen Möglichkeiten können Ober- und Unterfolienabschnitt vorteilhaft durch Koextrusion verbunden sein, vorzugsweise ist die Verbindung zwischen Oberfolienabschnitt und Unterfolienabschnitt jedoch als Klebstoffschicht ausgeführt, welche vorzugsweise eine flächenbezogene Auftragsmasse (umgangssprachlich häufig als "Auftragsgewicht" bezeichnet) von unter 30 Gramm pro Quadratmeter aufweist, um auch Ausbluten dieser Klebstoffschicht zu vermeiden. Aus dem selben Grund wird für die Klebstoffschicht zwischen Ober- und Unterfolienabschnitt vorzugsweise ein relativ "harter", d.h. wenig zum Fließen neigender Acrylatkleber gewählt.

Die Haftklebstoffschicht auf der der Oberfolie abgewandten Seite des Unterfolienabschnitts ist dagegen, entsprechend dem üblichen Einsatzzweck einer Anbringung auf "schwierigen", d.h. besonders rauhen oder anderweitig haftungsunfreundlichen Oberflächen, vorzugsweise dicker als 40 µm, in der Praxis wohl meist zwischen 45 und 150 µm dick. In besonderen Fällen können auch Dicken der Haftklebstoffschicht von über 1 mm vorteilhaft sein. Um optimale Hafteigenschaften zu erreichen, werden vorzugsweise relativ weiche Haftklebstoffe aus modifiziertem Acrylat oder Kautschukmaterial verwendet.

Ein gegen Ausbluten von Haftklebstoff gesichertes Etikett kann nun durch thermisches Schrumpfen des Unterfolienabschnitts aus einem Etikettenrohling der oben beschriebenen Art erzeugt werden. Das bedeutet, der Etikettenrohling, welcher vorzugsweise auf einem klebstoffabweisend beschichteten Trägermaterial, beispielsweise Silikonpapier, vorliegt, wird einer Behandlung durch Wärmeeinwirkung unterzogen, wodurch der Unterfolienabschnitt gegenüber dem Oberfolienabschnitt seine Flächenausdehnung irreversibel verringert, so daß der Oberfolienabschnitt den geschrumpften Unterfolienabschnitt umlaufend überragt, vorzugsweise jedoch nicht weiter als (umlaufend) 1,5 mm. Besonders bevorzugt ist für viele Einsatzzwecke eine Schrumpfung, bei welcher sich der Rand des Unterfolienabschnitts gegenüber dem Rand des Oberfolienabschnitts um etwa 0,2 bis 0,5 mm zurückzieht.

Der Haftklebstoff haftet in aller Regel besser am Unterfolienabschnitt als an der Unterlage, insbesondere, wenn es sich bei letzterer um klebstoffabweisend beschichtetes Trägermaterial, beispielsweise Silikonpapier, handelt. Durch das Zurückziehen des Unterfolienabschnitts im Randbereich des Etiketts entsteht so eine Art "Ausblutschutzzone", d.h. eine Randzone, welche unter dem Unterfolienabschnitt hervortretenden Haftklebstoff auffängt. Da diese Randzone noch vom den Unterfolienabschnitt überragenden Oberfolienabschnitt abgedeckt ist, wird so vermieden, daß austretender Klebstoff zum unerwünschten Verkleben von Rollenmaterial oder zur Verunreinigung empfindlicher Verarbeitungsmaschinen führt.

Je nach Einsatzzweck können die erfindungsgemäßen Etiketten bzw. Etikettenrohlinge vorteilhafterweise unterschiedlichste Ausstattungsmerkmale aufweisen, welche aus der Etiketten-Anwendung bekannt sind. Dazu gehören Aufdrucke mit Text-, Bild- oder Code-Information, für die Nachbeschriftung optimierte Oberflächen oder Spezialfilme, Lumineszenzfarbschichten, Schutzschichten, Anstanzungen, Laschen, ablösbare Abschnitte und Sicherheitsmerkmale unterschiedlichster Ausprägung.

Nachfolgend wird eine bevorzugte Ausführungsform eines erfindungsgemäßen Etikettenrohlings anhand eines Beispiels unter Bezugnahme auf die zugehörige Zeichnung beschrieben.

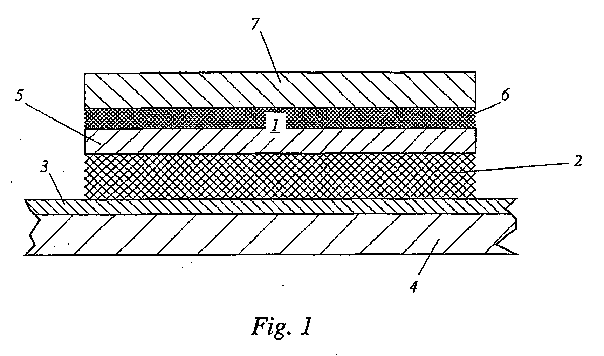

Dabei zeigt Fig. 1 einen auf einem Träger angeordneten erfindungsgemäßen Etikettenrohling in seitlicher, geschnittener Ansicht, und zwar im Zustand vor der Wärmebehandlung zur Hervorrufung der Schrumpfung des Uriterfolienabschnitts. Die Darstellung ist rein schematisch und nicht maßstabsgetreu; insbesondere sind Schichtdicken aus Anschaulichkeitsgründen stark vergrößert abgebildet.

Der in Fig. 1 dargestellte Etikettenrohling 1 ist über die Haftklebstoffschicht 2, welche aus einem fließfähigen, stark haftenden, jedoch grundsätzlich zum Ausbluten neigenden Klebstoff besteht, auf der klebstoffabweisenden Beschichtung 3 einer Trägerbahn 4 angeordnet, welche nicht Teil des Etikettenrohlings ist. Auf der Trägerbahn sind noch weitere Etikettenrohlinge (nicht dargestellt) angeordnet, so daß sich alle Herstellungs- und Verarbeitungsschritte auf üblichen, für "Endlosbetrieb" geeigneten Maschinen bewerkstelligen lassen.

Die Haftklebstoffschicht 2 ist mit über einem Zehntelmillimeter relativ dick, was zum einen die Haftwirkung auf rauhen Unterlagen verbessert, zum anderen jedoch die Neigung zum Ausbluten grundsätzlich verstärkt.

Die Haftklebstoffschicht 2 ist auf die Unterseite des Unterfolienabschnitts 5 aufgebracht, an welcher sie stärker haftet, als an der klebstoffabweisenden Beschichtung 3 der Trägerbahn 4. Die Oberseite des Unterfolienabschnitts 5 ist wiederum mittels einer Klebstoffschicht 6 mit der Unterseite des Oberfolienabschnitts 7 verbunden, der aus einer thermostabilisierten Polyesterfolie besteht. Auch andere Materialien ausreichender Temperaturstabilität eignen sich als Oberfolie.

Der Unterfolienabschnitt 5 besteht aus einer Schrumpffolie, d.h. einer Kunststofffolie, die sich unter Wärmeeinwirkung irrversibel zusammenzieht. Innerhalb der Ebene der Hauptausdehnung der Schrumpffolie ist dieses Verhalten weitgehend isotrop, d.h. der Unterfolienabschnitt verkürzt sich unter Wärmeeinwirkung gleichmäßig in seiner Längen- und Breitenausdehnung. Wird die Temperatur nun auf einige zehn Grad über Raumtemperatur angehoben, so entsteht als Folge des durch die Temperaturanhebung bewirkten Schrumpfens des Unterfolienabschnitts ein umlaufender Randbereich, an welchem der Oberfolienabschnitt um einige Zehntelmillimeter über den Unterfolienabschnitt hinausragt (nicht dargestellt). Da die Haftklebstoffschicht 2 stärker am Unterfolienabschnitt 5 als an der klebstoffabweisenden Beschichtung 3 der Trägerbahn 4 haftet, zieht sich auch die Haftklebstoffschicht 2 auf das neue Flächenmaß des Unterfolienabschnitts 5 zusammen. Somit kann der durch die wärmeinduzierte Schrumpfbehandlung entstandene Randbereich als eine Art "Auffangzone" für während Transport, Lagerung oder Weiterverarbeitung eventuell unter dem Unterfolienabschnitt 5 hervortretenden ("ausblutenden") Klebstoff dienen. Beeinträchtigungen durch unter der Etikettenkontur hervortretenden Klebstoff sind daher nach erfolgter Wärmebehandlung nicht zu befürchten.

Während der Schrumpfbehandlung können Unterfolienabschnitt 5 und Oberfolienabschnitt 7 aneinander abgleiten, so daß sich zum einen die beschriebene Randzone ausbilden kann, zum anderen sich der Oberfolienabschnitt 7 weder aufwölbt noch vom Unterfolienabschnitt 5 abhebt. Dies setzt voraus, daß die Klebstoffschicht 6 in dem Temperaturbereich, in weichem die Schrumpfung stattfindet, nur Schubspannungen unterhalb einer Grenzspannung übertragen kann, welche das Aufwölben des Oberfolienabschnitts hervorrufen würde.

Ferner ist zu berücksichtigen, daß die Klebstoffschicht 6 selbst nicht zum Ausbluten neigen darf, um nicht den Schutzeffekt der Schrumpfbehandlung zunichte zu machen. Dies wird durch ein entsprechend niedriges Auftragsgewicht des Klebstoffs der Klebstoffschicht 6 von etwa 28 Gramm pro Quadratmeter erreicht. Zudem wird ein relativ harter, d.h. wenig fließfähiger Klebstoff verwendet.

## Patentansprüche

1. Etikettenrohling (1), aufweisend einen Oberfolienabschnitt (7), einen mit dem Oberfolienabschnitt (7) verbundenen Unterfolienabschnitt (5) und eine Haftklebstoffschicht (2), welche an der vom Oberfolienabschnitt (7) abgewandten Seite des Unterfolienabschnitts (5) angebracht ist,
**dadurch gekennzeichnet,**
**daß** der Unterfolienabschnitt (5) aus einer Schrumpffolie besteht, deren Flächenausdehnung durch Temperaturerhöhung in einen gegenüber Raumtemperatur angehobenen Temperaturbereich reduzierbar ist, in welchem der Oberfolienabschnitt (7) keine merkliche Reduzierung seiner Flächenausdehnung erfährt.

2. Etikettenrohling (1) gemäß Anspruch 1, **dadurch gekennzeichnet, daß** die Verbindung zwischen Oberfolienabschnitt (7) und Unterfolienabschnitt (5) so ausgeführt ist, daß sie bei Reduzierung der Flächenausdehnung des Unterfolienabschnitts (5) in dem angehobenen Temperaturbereich nur Schubspannungen unterhalb einer Aufwölben des Oberfolienabschnitts (7) ermöglichenden Grenzspannung übertragen kann.

3. Etikettenrohling (1) gemäß einem der vorangehenden Ansprüche, **dadurch gekennzeichnet, daß** die Verbindung zwischen Oberfolienabschnitt (7) und Unterfolienabschnitt (5) als Klebstoffschicht (6) ausgeführt ist.

4. Etikettenrohling (1) gemäß Anspruch 3, **dadurch gekennzeichnet, daß** die Klebstoffschicht (6) zwischen Oberfolienabschnitt (7) und Unterfolienabschnitt (5) eine flächenbezogene Auftragsmasse unter 30 Gramm pro Quadratmeter aufweist.

5. Etikettenrohling (1) gemäß einem der Ansprüche 3-4, **dadurch gekennzeichnet, daß** die Klebstoffschicht (6) zwischen Oberfolienabschnitt (7) und Unterfolienabschnitt (5) aus einem Acrylatsystem besteht.

6. Etikettenrohling (1) gemäß einem der vorangehenden Ansprüche, **dadurch gekennzeichnet, daß** die Haftklebstoffschicht (2) dicker als 40 *µ*m ist.

7. Etikettenrohling (1) gemäß einem der vorangehenden Ansprüche, **dadurch gekennzeichnet, daß** die Haftklebstoffschicht (2) aus einem modifizierten Acrylat oder Kautschukmaterial besteht.

8. Etikettenrohling (1) gemäß einem der vorangehenden Ansprüche, **dadurch gekennzeichnet, daß** der Oberfolienabschnitt (7) thermostabilisiert ist.

9. Gegen Ausbluten von Haftklebstoff gesichertes Etikett, **dadurch gekennzeichnet, daß** es aus einem Etikettenrohling (1) gemäß einem der vorangehenden Ansprüche durch thermisches Schrumpfen des Unterfolienabschnitts (5) erzeugt wird.

10. Etikett gemäß Anspruch 9, **dadurch gekennzeichnet, daß** der Oberfolienabschnitt (7) den geschrumpften Unterfolienabschnitt (5) umlaufend, jedoch nicht weiter als 1,5 mm überragt.

11. Etikett gemäß Anspruch 10, **dadurch gekennzeichnet, daß** der Oberfolienabschnitt (7) den geschrumpften Unterfolienabschnitt (5) umlaufend um 0,2 bis 0,5 mm überragt.

12. Verfahren zur Herstellung von gegen Ausbluten von Haftklebstoff gesicherten Etiketten, welches folgende Schritte aufweist:
(a) Bereitstellen eines klebstoffabweisend beschichteten Trägermaterials (4), auf welchem Etikettenrohlinge (1) angeordnet sind, die jeweils einen Oberfolienabschnitt (7), einen mit dem Oberfolienabschnitt (7) verbundenen, aus Schrumpffolie bestehenden Unterfolienabschnitt (5) und eine den Etikettenrohling (1) auf der klebstoffabweisenden Beschichtung (3) des Trägermaterials (4) haltende Haftklebstoffschicht (2) aufweisen, und
(b) thermisches Schrumpfen des Unterfolienabschnitts (5), so daß der Oberfolienabschnitt (7) den Unterfolienabschnitt (5) umlaufend überragt.

## Claims

1. A label blank (1), having an upper film section (7), a lower film section (5) bonded to the upper film section (7), and a pressure-sensitive adhesive layer (2), which is applied on the side of the lower film section (5) facing away from the upper film section (7),
**characterized in that** the lower film section (5) comprises a shrink film, whose area dimensions may be reduced by increasing the temperature into a temperature range elevated in relation to room temperature, in which the upper film section (7) does not experience a noticeable reduction of its area dimensions.

2. The label blank (1) according to Claim 1,
**characterized in that** the bond between upper film section (7) and lower film section (5) is implemented in such a way that, during reduction of the area dimensions of the lower film section (5) in the elevated temperature range, it may only transmit shear stresses below a limiting stress which allows arching of the upper film section (7).

3. The label blank (1) according to one of the preceding claims, **characterized in that** the bond between upper film section (7) and lower film section (5) is implemented as an adhesive layer (6).

4. The label blank (1) according to Claim 3, **characterized in that** the adhesive layer (6) between upper film section (7) and lower film section (5) has an application mass per unit area below 30 g per square meter.

5. The label blank (1) according to one of Claims 3-4, **characterized in that** the adhesive layer (6) between upper film section (7) and lower film section (5) comprises an acrylate system.

6. The label blank (1) according to one of the preceding claims, **characterized in that** the pressure-sensitive adhesive layer (2) is thicker than 40 m.

7. The label blank (1) according to one of the preceding claims, **characterized in that** the pressure-sensitive adhesive layer (2) comprises a modified acrylate or rubber material.

8. The label blank (1) according to one of the preceding claims, **characterized in that** the upper film section (7) is thermostabilized.

9. A label secured against bleeding of pressure-sensitive adhesive, **characterized in that** it is produced from a label blank (1) according to one of the preceding claims through thermal shrinking of the lower film section (5).

10. The label according to Claim 9, **characterized in that** the upper film section (7) projects peripherally beyond the shrunk lower film section (5), but not further than 1.5 mm.

11. The label according to Claim 10, **characterized in that** the upper film section (7) projects peripherally beyond the shrunk lower film section (5) by 0.2 to 0.5 mm.

12. A method for manufacturing labels secured against bleeding of pressure-sensitive adhesive, which has the following steps:
(a) providing an adhesive-repellent coated carrier material (4), on which label blanks (1) are positioned, each of which has an upper film section (7), a lower film section (5), which is bonded to the upper film section (7) and comprises shrink film, and a pressure-sensitive adhesive layer (2), which holds the label blank (1) on the adhesive-repellent coating (3) of the carrier material (4), and
(b) thermal shrinking of the lower film section (5), so that the upper film section (7) projects peripherally beyond the lower film section (5).

## Revendications

1. Ebauche d'étiquette (1), comportant une section de film supérieure (7), une section de film inférieure (5) connectée à la section de film supérieure (7) et une couche de colle de contact (2) qui est appliquée sur la face détournée de la section de film supérieure (7) de la section de film inférieure (5),
**caractérisée en ce que**
la section de film inférieure (5) est composée d'un film rétractable dont l'extension de surface peut être réduite par accroissement de la température dans une plage de température accrue par rapport à la température ambiante et à laquelle la section de film supérieure (7) ne subit pas de réduction notable de son extension de surface.

2. Ebauche d'étiquette (1) selon la revendication 1, **caractérisée en ce que** la connexion entre la section de film supérieure (7) et la section de film inférieure (5) est réalisée de manière à ce que lors de la réduction de l'extension de surface de la section de film inférieure (5) dans la plage de température accrue, elle ne puisse transmettre que des tensions de poussée inférieures à une tension limite permettant un bombement de la section de film supérieure (7).

3. Ebauche d'étiquette (1) selon une des revendications précédentes, **caractérisée en ce que** la connexion entre la section de film supérieure (7) et la section de film inférieure (5) est réalisée sous forme d'une couche de colle (6).

4. Ebauche d'étiquette (1) selon la revendication 3, **caractérisée en ce que** la couche de colle (6) située entre la section de film supérieure (7) et la section de film inférieure (5) présente une masse d'application en fonction de la surface inférieure à 30 grammes par mètre carré.

5. Ebauche d'étiquette (1) selon une des revendications 3 et 4, **caractérisée en ce que** la couche de colle (6) située entre la section de film supérieure (7) et la section de film inférieure (5) est composée d'un système acrylique.

6. Ebauche d'étiquette (1) selon une des revendications précédentes, **caractérisée en ce que** la couche de colle de contact (2) a une épaisseur supérieure à 40 µm.

7. Ebauche d'étiquette (1) selon une des revendications précédentes, **caractérisée en ce que** la couche de colle de contact (2) est composée d'un acrylate modifié ou de matériau de caoutchouc.

8. Ebauche d'étiquette (1) selon une des revendications précédentes, **caractérisée en ce que** la section de film supérieure (7) est thermostabilisée.

9. Etiquette anti-migration de colle de contact, **caractérisée en ce qu'**elle est fabriquée à partir d'une ébauche d'étiquette (1) selon une des revendications précédentes par rétraction thermique de la section de film inférieure (5).

10. Etiquette selon la revendication 9, **caractérisée en ce que** la section de film supérieure (7) déborde de la section de film inférieure rétractée (5) sur sa périphérie mais pas de plus de 1,5 mm.

11. Etiquette selon la revendication 10, **caractérisée en ce que** la section de film supérieure (7) déborde de la section de film inférieure rétractée (5) sur sa périphérie de 0,2 à 0,5 mm.

12. Procédé de fabrication d'étiquettes anti-migration de colle de contact, comportant les étapes suivantes :
(a) préparation d'un matériau support à revêtement anti-adhésif (4) sur lequel sont disposées des ébauches d'étiquettes (1) qui présentent respectivement une section de film supérieure (7), une section de film inférieure (5) connectée à la section de film supérieure (7) et une couche de colle de contact (2) maintenant l'ébauche d'étiquette (1) sur le revêtement anti-adhésif (3) du matériau support (4), et
(b) rétraction thermique de la section de film inférieure (5), de sorte que la section de film supérieure (7) déborde de la section de film inférieure (5) sur sa périphérie.
